# EUROPÄISCHE PATENTANMELDUNG

(11) **EP 3 312 520 A1**
(43) Veröffentlichungstag der Anmeldung: **25.04.2018**
(21) Anmeldenummer: 17197046.0
(22) Anmeldetag: 18.10.2017
(51) Int. Cl.: F24F 11/00, F24F 7/00, F24F 110/00, F24F 110/50

(54) **GEBÄUDELÜFTUNGSVORRICHTUNG**

(30) Priorität: 18.10.2016 DE 102016220378
(71) Anmelder: Robert Bosch GmbH, 70442 Stuttgart (DE)
(72) Erfinder: Senn, Matthias, 73249 Wernau (DE)

(57) **Zusammenfassung**

Die Erfindung geht aus von einer Gebäudelüftungsvorrichtung (10) mit zumindest einer Lüftungseinheit (12), welche zu einer Förderung einer Zuluft und einer Abluft vorgesehen ist, mit zumindest einer Sensoreinheit (14), welche dazu vorgesehen ist, zumindest einen Lüftungsparameter zu detektieren, und mit zumindest einer Steuereinheit (16), welche dazu vorgesehen ist, die Lüftungseinheit (12) in Abhängigkeit von dem Lüftungsparameter zu betreiben.

Es wird vorgeschlagen, dass die Sensoreinheit (14) zumindest einen Zuluftsensor (18) aufweist und dazu vorgesehen ist, den Lüftungsparameter mittels des Zuluftsensors (18) in der Zuluft zu detektieren.

## Beschreibung

### Stand der Technik

Es ist bereits eine Gebäudelüftungsvorrichtung mit einer Lüftungseinheit, welche zu einer Förderung einer Zuluft und einer Abluft vorgesehen ist, bekannt. Eine Sensoreinheit detektiert in einem Betriebszustand einen Lüftungsparameter mittels eines Abluftsensors in der Abluft und leitet einen den Lüftungsparameter kennzeichnenden Wert an eine Steuereinheit weiter, welche die Lüftungseinheit in Abhängigkeit von dem Lüftungsparameter betreibt.

### Offenbarung der Erfindung

Die Erfindung geht aus von einer Gebäudelüftungsvorrichtung mit zumindest einer Lüftungseinheit mit zumindest einer Sensoreinheit, welche dazu vorgesehen ist, zumindest einen Lüftungsparameter zu detektieren, und mit zumindest einer Steuereinheit, welche dazu vorgesehen ist, die Lüftungseinheit in Abhängigkeit von dem Lüftungsparameter zu betreiben.

Es wird vorgeschlagen, dass die Sensoreinheit zumindest einen Zuluftsensor aufweist und dazu vorgesehen ist, den Lüftungsparameter mittels des Zuluftsensors in der Zuluft zu detektieren.

Unter einer "Gebäudelüftungsvorrichtung" soll insbesondere zumindest ein Teil, insbesondere eine Unterbaugruppe, einer Gebäudelüftungsanlage verstanden werden.

Unter einer "Lüftungseinheit" soll insbesondere eine Einheit verstanden werden, welche zu einem Austausch von Luft in zumindest einem Raum, insbesondere in zumindest einem Innenraum eines Gebäudes, vorgesehen ist. Insbesondere ist die Lüftungseinheit dazu vorgesehen, die Zuluft aus einer Umgebung in den Raum zu fördern. Die Lüftungseinheit ist insbesondere dazu vorgesehen, die Abluft aus dem Raum in eine Umgebung zu fördern. Insbesondere weist die Lüftungseinheit zumindest eine Luftpumpe, insbesondere zumindest einen Ventilator, auf, welche insbesondere zu der Förderung der Zuluft und der Abluft vorgesehen ist. In wenigstens einem Betriebszustand wälzt die Lüftungseinheit insbesondere mittels der Luftpumpe eine in dem Raum befindliche Luft wenigstens teilweise um und/oder tauscht eine in dem Raum befindliche Luft wenigstens teilweise aus.

Unter einer "Zuluft" soll insbesondere eine in zumindest einen Raum, insbesondere in zumindest einen Innenraum eines Gebäudes, einzubringende Luft verstanden werden. Unter einer "Abluft" soll insbesondere eine aus zumindest einem Raum, insbesondere aus zumindest einem Innenraum eines Gebäudes, herausgeführte Luft verstanden werden.

Unter einer "Sensoreinheit" soll insbesondere eine Einheit verstanden werden, welche zumindest einen Detektor zu einer Detektion des Lüftungsparameters aufweist und welche insbesondere dazu vorgesehen ist, einen den Lüftungsparameter kennzeichnenden Wert auszugeben, wobei es sich bei dem Lüftungsparameter vorteilhaft um eine physikalische und/oder chemische Größe handelt. Insbesondere ist die Sensoreinheit zu einer Kommunikation mit der Steuereinheit vorgesehen. Die Steuereinheit weist insbesondere zumindest ein Empfangsmodul auf. Insbesondere weist die Sensoreinheit zumindest ein Sendemodul auf, welches insbesondere dazu vorgesehen ist, den den Lüftungsparameter kennzeichnenden Wert an die Steuereinheit, insbesondere an das Empfangsmodul der Steuereinheit, zu übermitteln.

Unter einem "Lüftungsparameter" soll insbesondere ein Luftparameter in einer Zuluft oder einer Abluft verstanden werden. Unter einem "Luftparameter" soll insbesondere ein Parameter verstanden werden, welcher mit einer Luft korreliert ist, die sich insbesondere in zumindest einem Raum, vorteilhaft in zumindest einem Innenraum eines Gebäudes, befindet. Der Luftparameter könnte beispielsweise eine Luftmenge und/oder eine Lufttemperatur und/oder eine Luftströmungsgeschwindigkeit und/oder eine Luftströmungsrichtung und/oder eine Luftfeuchtigkeit und/oder ein CO₂-Gehalt in einer Luft und/oder ein Gehalt an flüchtigen organischen Verbindungen in einer Luft sein.

Unter einer "Steuereinheit" soll insbesondere eine elektronische Einheit verstanden werden, die vorzugsweise in einer Steuer- und/oder Regeleinheit einer Gebäudelüftungsanlage wenigstens teilweise integriert ist und die vorzugsweise dazu vorgesehen ist, zumindest die Lüftungseinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Steuereinheit ist insbesondere dazu vorgesehen, die Lüftungseinheit in Abhängigkeit von dem den Lüftungsparameter kennzeichnenden Wert, welchen die Steuereinheit insbesondere von der Sensoreinheit empfängt, und insbesondere zusätzlich in Abhängigkeit von zumindest einem Vorgabewert für den Luftparameter zu betreiben. Die Steuereinheit ist insbesondere dazu vorgesehen, den Vorgabewert für den Luftparameter von zumindest einer Bedienerschnittstelle zu empfangen und/oder aus der Bedienerschnittstelle auszulesen. Die Gebäudelüftungsvorrichtung weist insbesondere zumindest eine Bedienerschnittstelle auf, welche insbesondere zu einer Eingabe zumindest eines Vorgabewerts für den Luftparameter vorgesehen ist. Unter einem "Vorgabewert" für den Luftparameter soll insbesondere ein von einem Bediener mittels der Bedienerschnittstelle vorgegebener Sollwert für den Luftparameter verstanden werden, welchen die Steuereinheit insbesondere durch Betreiben der Lüftungseinheit wenigstens im Wesentlichen einstellt.

Der Zuluftsensor ist insbesondere dazu vorgesehen, den Lüftungsparameter in der Zuluft, insbesondere zeitlich betrachtet, vor einem Einbringen der Zuluft in zumindest einen Raum, insbesondere in zumindest einen Innenraum eines Gebäudes, zu detektieren. Insbesondere passiert die Zuluft zunächst den Zuluftsensor und erreicht anschließend den Raum, insbesondere den Innenraum des Gebäudes.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Gebäudelüftungsvorrichtung kann insbesondere ein hoher Bedienkomfort für einen Bediener erreicht werden. Insbesondere kann eine Luftmengenregelung für die Lüftungseinheit anhand des Lüftungsparameters optimiert werden, und zwar insbesondere gezielt durch den in der Zuluft detektieren Lüftungsparameter, da hierdurch insbesondere eine in einen Raum einzubringende Zuluft gezielt beeinflusst werden kann. Mit Hilfe einer bedarfsgerechten Luftmengenregelung für die Lüftungseinheit kann insbesondere ein Energiebedarf für Ventilatoren und/oder ein Wärmeverlust verringert werden.

Die Sensoreinheit könnte beispielsweise ausschließlich den Zuluftsensor aufweisen und insbesondere in wenigstens einem Betriebszustand ausschließlich den Lüftungsparameter in der Zuluft detektieren. Vorzugsweise weist die Sensoreinheit zumindest einen Abluftsensor auf und ist dazu vorgesehen, zumindest einen weiteren Lüftungsparameter mittels des Abluftsensors in der Abluft zu detektieren. Der Abluftsensor ist insbesondere dazu vorgesehen, den weiteren Lüftungsparameter in der Abluft, insbesondere zeitlich betrachtet, im Anschluss an ein Herausführen der Abluft aus zumindest einem Raum, insbesondere aus zumindest einem Innenraum eines Gebäudes, zu detektieren. Insbesondere verlässt die Abluft zunächst den Raum, insbesondere den Innenraum des Gebäudes, und erreicht anschließend den Abluftsensor. Dadurch kann insbesondere neben der Zuluft ebenfalls die Abluft kontrolliert und/oder überprüft werden, wodurch insbesondere Rückschlüsse auf eine in dem Raum, insbesondere in dem Innenraum des Gebäudes, anwesende Luft gezogen werden können.

Zudem wird vorgeschlagen, dass die Steuereinheit dazu vorgesehen ist, die Lüftungseinheit in Abhängigkeit von einer Differenz zwischen dem Lüftungsparameter und dem weiteren Lüftungsparameter zu betreiben. Die Steuereinheit ermittelt insbesondere im Anschluss an einen Empfang des Lüftungsparameters und des weiteren Lüftungsparameters von der Sensoreinheit die Differenz zwischen dem Lüftungsparameter und dem weiteren Lüftungsparameter. Die Steuereinheit vergleicht in wenigstens einem Betriebszustand insbesondere die Differenz zwischen dem Lüftungsparameter und dem weiteren Lüftungsparameter mit zumindest einem Referenzwert und/oder mit zumindest einem Referenzbereich. Der Referenzwert und/oder der Referenzbereich könnten/könnte beispielsweise in einer Speichereinheit der Steuereinheit gespeichert und/oder hinterlegt sein. Beispielsweise könnte die Steuereinheit in wenigstens einem Betriebszustand durch Betreiben der Lüftungseinheit die Differenz in dem Referenzbereich und/oder nahe dem Referenzwert halten. Dadurch kann die Lüftungseinheit insbesondere optimal betrieben werden, wodurch insbesondere ein hoher Bedienerkomfort und/oder eine geringe Defektwahrscheinlichkeit ermöglicht werden können/kann.

Weiterhin wird vorgeschlagen, dass die Steuereinheit dazu vorgesehen ist, mittels der Differenz zumindest einen Luftparameter innerhalb eines zu belüftenden Raums, insbesondere eines Innenraums eines Gebäudes, insbesondere wenigstens im Wesentlichen innerhalb eines Komfortbereichs zu halten. Unter einem "Komfortbereich" soll insbesondere ein Bereich verstanden werden, welcher einen Standardwert umfasst und welcher insbesondere von einem Menschen als angenehm empfunden wird. Der Komfortbereich könnte beispielsweise im Fall, dass der Luftparameter eine Lufttemperatur ist, ein Bereich von 20°C bis 22°C sein. Beispielsweise könnte der Komfortbereich im Fall, dass der Luftparameter eine Luftfeuchtigkeit ist, ein Bereich von 40 % bis 60 % sein. Unter "wenigstens im Wesentlichen innerhalb" eines Komfortbereichs soll insbesondere in technischem Maßstab innerhalb verstanden werden, wobei insbesondere zumindest eine Rundungstoleranz und/oder zumindest eine Dichtungstoleranz zu berücksichtigen sind. Dadurch kann in dem Raum, insbesondere in dem Innenraum des Gebäudes, insbesondere eine angenehme Atmosphäre geschaffen und/oder einem Bediener ein komfortables Wohnen ermöglicht werden.

Vorzugsweise ist die Steuereinheit dazu vorgesehen, mittels der Differenz zumindest eine Anwesenheit von Lebewesen in einem zu belüftenden Raum, insbesondere einem Innenraum eines Gebäudes, zu ermitteln. Die Steuereinheit könnte beispielsweise dazu vorgesehen sein, mittels der Differenz, insbesondere zusätzlich zu der Anwesenheit von Lebewesen, zumindest eine Aktivität und/oder eine Anzahl von Lebewesen in einem zu belüftenden Raum, insbesondere einem Innenraum eines Gebäudes, zu ermitteln. Dadurch können insbesondere zusätzliche Funktionen, wie insbesondere die Anwesenheitserkennung, umgesetzt und damit einem Bediener ein hoher Komfort bereitgestellt werden.

Zudem wird vorgeschlagen, dass die Gebäudelüftungsvorrichtung zumindest eine Wärmepumpe aufweist, wobei die Steuereinheit dazu vorgesehen ist, in Abhängigkeit von dem Lüftungsparameter und/oder dem weiteren Lüftungsparameter die Zuluft mittels der Wärmepumpe zu kühlen und/oder zu erwärmen. Unter einer "Wärmepumpe" soll insbesondere eine Einheit verstanden werden, welche dazu vorgesehen ist, zumindest einem Medium, wie insbesondere der Zuluft, insbesondere mittels eines Wärme-Kraft-Prozesses thermische Energie zuzuführen und/oder zu entziehen. Insbesondere ist die Steuereinheit dazu vorgesehen, die Wärmepumpe in Abhängigkeit von dem Lüftungsparameter und/oder dem weiteren Lüftungsparameter zu betreiben und insbesondere die Zuluft mittels der Wärmepumpe zu kühlen und/oder zu erwärmen. Die Steuereinheit ist insbesondere dazu vorgesehen, durch Kühlung und/oder Erwärmung der Zuluft den Luftparameter in dem Komfortbereich zu halten und/oder in den Komfortbereich zu bringen. Dadurch kann insbesondere ein als Lufttemperatur ausgebildeter Luftparameter gezielt beeinflusst werden, wodurch insbesondere ein hoher Komfort für einen Bediener erzielt werden kann.

Weiterhin wird vorgeschlagen, dass die Steuereinheit dazu vorgesehen ist, in Abhängigkeit von dem Lüftungsparameter eine Entstehung von Kondensat in der Zuluft insbesondere wenigstens im Wesentlichen und vorteilhaft unter Berücksichtigung von technischen Grenzen vollständig zu verhindern. Insbesondere ist die Steuereinheit dazu vorgesehen, die Wärmepumpe in Abhängigkeit von dem Lüftungsparameter zu betreiben und insbesondere mittels der Wärmepumpe eine Entstehung von Kondensat in der Zuluft insbesondere wenigstens im Wesentlichen und vorteilhaft unter Berücksichtigung von technischen Grenzen vollständig zu verhindern. Dadurch kann insbesondere eine hohe Betriebssicherheit gewährleistet und/oder ein Defekt der Lüftungseinheit aufgrund von zu hoher Feuchtigkeit vermieden werden.

Der Lüftungsparameter und/oder der weitere Lüftungsparameter könnten/könnte beispielsweise eine Lufttemperatur und/oder eine Luftfeuchtigkeit und/oder ein CO₂-Gehalt in einer Luft und/oder ein Gehalt an flüchtigen organischen Verbindungen in einer Luft sein. Vorzugsweise ist der Lüftungsparameter und/oder der weitere Lüftungsparameter zumindest eine Lufttemperatur und/oder ein CO₂-Gehalt und/oder ein Gehalt an flüchtigen organischen Verbindungen und/oder eine Luftfeuchtigkeit. Dadurch kann insbesondere ein besonders hoher Bedienkomfort für einen Bediener erreicht werden.

Ein Bedienkomfort für einen Bediener kann insbesondere weiter gesteigert werden durch eine Gebäudelüftungsanlage mit zumindest einer erfindungsgemäßen Gebäudelüftungsvorrichtung.

Durch ein Verfahren zum Betrieb zumindest einer erfindungsgemäßen Gebäudelüftungsvorrichtung, wobei eine Zuluft und eine Abluft gefördert werden und ein Lüftungsparameter detektiert wird, und wobei der Lüftungsparameter in der Zuluft detektiert wird, kann insbesondere ein besonders hoher Bedienkomfort für einen Bediener erreicht werden.

Die erfindungsgemäße Gebäudelüftungsvorrichtung soll hierbei nicht auf die oben beschriebene Anwendung und Ausführungsform beschränkt sein. Insbesondere kann die erfindungsgemäße Gebäudelüftungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

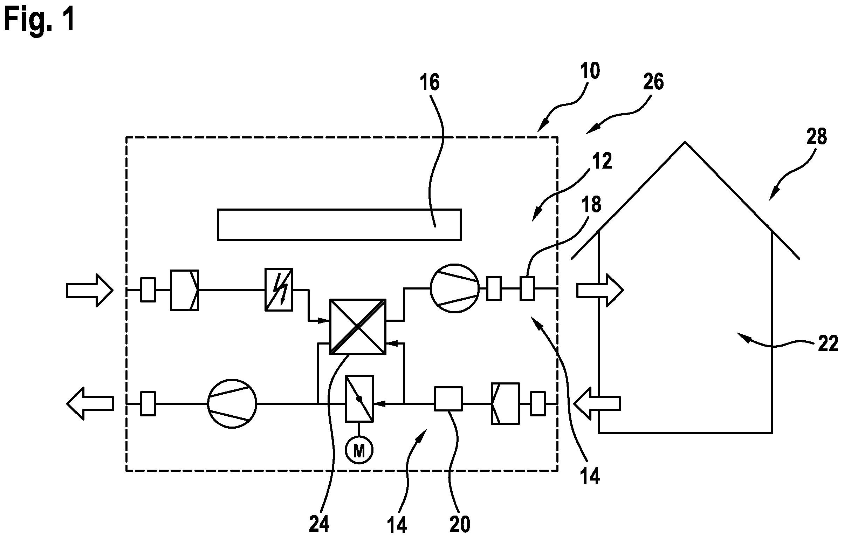

- Fig. 1: eine erfindungsgemäße Gebäudelüftungsanlage mit einer erfindungsgemäßen Gebäudelüftungsvorrichtung und ein Gebäude in einer schematischen Darstellung.

### Beschreibung des Ausführungsbeispiels

Fig. 1 zeigt eine Gebäudelüftungsanlage 26 mit einer Gebäudelüftungsvorrichtung 10 und ein Gebäude 28. Das Gebäude 28 weist die Gebäudelüftungsanlage 26 auf. Im vorliegenden Ausführungsbeispiel ist das Gebäude 28 als ein Wohnhaus ausgebildet. Das Gebäude 28 umschließt einen Raum 22. Der Raum 22 ist ein Innenraum des Gebäudes 28.

Die Gebäudelüftungsvorrichtung 10 ist zu einer Belüftung des Raums 22 vorgesehen. Die Gebäudelüftungsvorrichtung 10 weist zu der Belüftung des Raums 22 eine Lüftungseinheit 12 auf. Die Lüftungseinheit 12 ist zu einer Förderung einer Zuluft und einer Abluft vorgesehen. Hierzu weist die Lüftungseinheit 12 nötige Komponenten auf, wie beispielsweise zumindest eine Pumpe, insbesondere zumindest eine Luftpumpe, insbesondere zumindest einen Ventilator, und/oder zumindest einen Filter, insbesondere zumindest einen Luftfilter. Ein derartiger Aufbau von Lüftungseinheiten 12 ist aus dem Stand der Technik bekannt und wird daher im Folgenden nicht weiter beschrieben.

Die Gebäudelüftungsvorrichtung 10 weist eine Sensoreinheit 14 auf. In einem Betriebszustand detektiert die Sensoreinheit 14 einen Lüftungsparameter. Im vorliegenden Ausführungsbeispiel detektiert die Sensoreinheit 14 mehrere Lüftungsparameter. Die Sensoreinheit 14 übermittelt den Lüftungsparameter, insbesondere die Lüftungsparameter, in dem Betriebszustand an eine Steuereinheit 16 der Gebäudelüftungsvorrichtung 10.

Die Gebäudelüftungsvorrichtung 10 weist die Steuereinheit 16 auf. In dem Betriebszustand betreibt die Steuereinheit 16 die Lüftungseinheit 12 in Abhängigkeit von dem Lüftungsparameter. Die Steuereinheit 16 empfängt den Lüftungsparameter in dem Betriebszustand von der Sensoreinheit 14.

Die Sensoreinheit 14 weist einen Zuluftsensor 18 auf. In dem Betriebszustand detektiert die Sensoreinheit 14 den Lüftungsparameter mittels des Zuluftsensors 18 in der Zuluft. Im vorliegenden Ausführungsbeispiel detektiert die Sensoreinheit 14 mehrere Lüftungsparameter mittels des Zuluftsensors 18 in der Zuluft.

Zusätzlich zu dem Zuluftsensor 18 weist die Sensoreinheit 14 einen Abluftsensor 20 auf. In dem Betriebszustand detektiert die Sensoreinheit 14 einen weiteren Lüftungsparameter mittels des Abluftsensors 20 in der Abluft. Im vorliegenden Ausführungsbeispiel detektiert die Sensoreinheit 14 mehrere weitere Lüftungsparameter mittels des Abluftsensors 20 in der Abluft. Die Sensoreinheit 14 übermittelt den weiteren Lüftungsparameter, insbesondere die weiteren Lüftungsparameter, in dem Betriebszustand an die Steuereinheit 16.

In dem Betriebszustand ermittelt die Steuereinheit 16 aus dem Lüftungsparameter und dem weiteren Lüftungsparameter eine Differenz zwischen dem Lüftungsparameter und dem weiteren Lüftungsparameter. Die Steuereinheit 16 betreibt in dem Betriebszustand die Lüftungseinheit 12 in Abhängigkeit von der Differenz zwischen dem Lüftungsparameter und dem weiteren Lüftungsparameter.

Die Steuereinheit 16 ermittelt in dem Betriebszustand aus der Differenz eine innere Last zumindest eines Luftparameters innerhalb des zu belüftenden Raums 22.

Mittels der Differenz hält die Steuereinheit 16 in dem Betriebszustand einen Luftparameter innerhalb des zu belüftenden Raums 22 innerhalb eines Komfortbereichs. In Abhängigkeit von der Differenz betreibt die Steuereinheit 16 in dem Betriebszustand die Lüftungseinheit 12, um insbesondere den Luftparameter innerhalb des zu belüftenden Raums 22 innerhalb des Komfortbereichs zu halten.

Die Steuereinheit 16 hält in dem Betriebszustand einen Luftparameter, welcher ein CO₂-Gehalt ist, mittels der Differenz innerhalb des zu belüftenden Raums 22 innerhalb eines Komfortbereichs. Der Lüftungsparameter ist ein CO₂-Gehalt.

Ist beispielsweise ein CO₂-Gehalt in einer Umgebung größer als der Luftparameter, welcher ein CO₂-Gehalt ist, innerhalb des zu belüftenden Raums 22, reduziert die Steuereinheit 16 eine Luftwechselrate auf ein Minimum. Unter einer Luftwechselrate soll insbesondere eine Menge an über die Zuluft und/oder die Abluft ausgetauschter Luft verstanden werden.

Mittels der Differenz hält die Steuereinheit 16 in dem Betriebszustand einen Luftparameter, welcher eine Luftfeuchtigkeit ist, innerhalb des zu belüftenden Raums 22 innerhalb eines Komfortbereichs. Der Lüftungsparameter ist eine Luftfeuchtigkeit.

Ist beispielsweise eine Luftfeuchtigkeit in einer Umgebung geringer als der Luftparameter, welcher eine Luftfeuchtigkeit ist, innerhalb des zu belüftenden Raums 22, reduziert die Steuereinheit 16 eine Luftwechselrate auf ein Minimum, um insbesondere den Luftparameter innerhalb des zu belüftenden Raums 22 innerhalb eines Komfortbereichs zu halten. Übersteigt beispielsweise der Luftparameter, welcher eine Luftfeuchtigkeit ist, innerhalb des zu belüftenden Raums 22 einen Komfortbereich, erhöht die Steuereinheit 16 im Fall, dass eine Luftfeuchtigkeit in einer Umgebung geringer ist als der Luftparameter, welcher eine Luftfeuchtigkeit ist, innerhalb des zu belüftenden Raums 22, eine Luftwechselrate. Beispielsweise kann vermieden werden, dass im Sommer eine Luftwechselrate zu einer Reduzierung einer Luftfeuchtigkeit erhöht wird, obwohl eine Luftfeuchtigkeit in einer Umgebung keine Entfeuchtung des Raums 22 ermöglicht.

Die Steuereinheit 16 hält in dem Betriebszustand einen Luftparameter, welcher ein Gehalt an flüchtigen organischen Verbindungen ist, mittels der Differenz innerhalb des zu belüftenden Raums 22 innerhalb eines Komfortbereichs. Der Lüftungsparameter ist ein Gehalt an flüchtigen organischen Verbindungen.

Mittels der Differenz hält die Steuereinheit 16 in dem Betriebszustand einen Luftparameter, welcher eine Lufttemperatur ist, innerhalb des zu belüftenden Raums 22 innerhalb eines Komfortbereichs. Der Lüftungsparameter ist eine Lufttemperatur.

Insbesondere könnte die Steuereinheit 16 zu einer Kompromissbildung zwischen den verschiedenen Luftparametern und insbesondere zu einer Gewichtung der Luftparameter vorgesehen sein. Die Steuereinheit 16 könnte in dem Betriebszustand die Lüftungseinheit 12 insbesondere in Abhängigkeit von der Gewichtung der Luftparameter betreiben. Hierdurch kann insbesondere ein optimaler Komfort für einen Bediener erreicht werden, da insbesondere nicht ausschließlich auf eine Zielgröße sondern vielmehr auf zumindest zwei verschiedene Zielgrößen optimiert werden kann.

Mittels der Differenz ermittelt die Steuereinheit 16 in dem Betriebszustand eine Anwesenheit von Lebewesen in dem zu belüftenden Raum 22. Zu der Ermittlung der Anwesenheit von Lebewesen in dem zu belüftenden Raum 22 nutzt die Steuereinheit 16 einen Lüftungsparameter, welcher ein CO₂-Gehalt ist.

Lebewesen stoßen CO₂ aus. In dem Betriebszustand ermittelt die Steuereinheit 16 in Abhängigkeit von der Differenz eine Anzahl an Lebewesen in dem zu belüftenden Raum 22. Die Steuereinheit 16 vergleicht in dem Betriebszustand die Differenz mit einer Abhängigkeit einer Differenz von einer Anzahl an Lebewesen in dem zu belüftenden Raum 22. Insbesondere könnte ein CO₂-Gehalt proportional zu einer Anzahl an Lebewesen in dem zu belüftenden Raum 22 sein.

Bei erhöhter körperlicher Aktivität stoßen Lebewesen eine erhöhte Menge an CO₂ aus. In dem Betriebszustand ermittelt die Steuereinheit 16 in Abhängigkeit von der Differenz ein Maß an körperlicher Aktivität von in dem zu belüftenden Raum 22 anwesenden Lebewesen.

In dem Betriebszustand könnte die Steuereinheit 16 beispielsweise in Abhängigkeit von der Anwesenheit an Lebewesen und/oder von der Anzahl an Lebewesen und/oder von dem Maß an körperlicher Aktivität von in dem zu belüftenden Raum 22 anwesenden Lebewesen zumindest eine weitere Aktion einleiten, wie beispielsweise eine Regelung einer Heizung und/oder eine Regelung einer Beleuchtung und/oder eine Regelung einer Haustechnik, wie insbesondere einer Jalousie.

Die Gebäudelüftungsvorrichtung 10 weist eine Wärmepumpe 24 auf. In dem Betriebszustand kühlt und/oder erwärmt die Steuereinheit 16 in Abhängigkeit von dem Lüftungsparameter mittels der Wärmepumpe 24 die Zuluft.

In dem Betriebszustand verhindert die Steuereinheit 16 in Abhängigkeit von dem Lüftungsparameter durch Kühlung der Zuluft mittels der Wärmepumpe 24 eine Unterschreitung eines Taupunkts in der Zuluft.

In dem Betriebszustand verhindert die Steuereinheit 16 in Abhängigkeit von dem Lüftungsparameter eine Entstehung von Kondensat in der Zuluft. Die Steuereinheit 16 reduziert eine Kühlleistung der Wärmepumpe 24 in dem Betriebszustand in Abhängigkeit von dem Lüftungsparameter, welcher eine Luftfeuchtigkeit ist, und zwar insbesondere falls der Lüftungsparameter, welcher eine Luftfeuchtigkeit ist, einen vordefinierten Prozentsatz einer Luftfeuchtigkeit und/oder einen Wert nahe 100% erreicht.

Die Steuereinheit 16 überwacht in dem Betriebszustand den Lüftungsparameter, welcher eine Luftfeuchtigkeit ist, in der Zuluft. Übersteigt der Lüftungsparameter, welcher eine Luftfeuchtigkeit ist, in der Zuluft einen vordefinierten Prozentsatz einer Luftfeuchtigkeit, leitet die Steuereinheit 16 zumindest eine geeignete Gegenmaßnahme ein. Beispielsweise könnte eine geeignete Gegenmaßnahme eine Abschaltung der Gebäudelüftungsanlage 26 sein. Alternativ könnte eine geeignete Gegenmaßnahme eine Erhöhung einer Temperatur der Zuluft sein. Die Steuereinheit 16 könnte die Erhöhung der Temperatur der Zuluft beispielsweise über eine Erhöhung eines Zuluftvolumenstroms und/oder über eine Reduktion eines Abluftvolumenstroms, und damit insbesondere über eine Dysbalance, erreichen.

In einem Verfahren zum Betrieb der Gebäudelüftungsvorrichtung 10 wird eine Zuluft und eine Abluft gefördert und ein Lüftungsparameter detektiert. Der Lüftungsparameter wird in der Zuluft detektiert.

Die Gebäudelüftungsanlage 26 ist im vorliegenden Ausführungsbeispiel als eine zentrale Gebäudelüftungsanlage ausgebildet. Alternativ könnte die Gebäudelüftungsanlage 26 beispielsweise als eine dezentrale Gebäudelüftungsanlage ausgebildet sein, welche insbesondere zumindest zwei räumlich getrennt angeordnete Teilbereiche aufweisen könnte. Im Fall einer dezentralen Gebäudelüftungsanlage 26 könnten beispielsweise der Zuluftsensor 18 und der Abluftsensor 20 jeweils Teil eines anderen Teilbereichs der Gebäudelüftungsanlage 26 sein. Insbesondere könnten Komponenten der Zuluft Teil eines ersten Teilbereichs der Gebäudelüftungsanlage 26 und Komponenten der Abluft Teil eines zweiten Teilbereichs der Gebäudelüftungsanlage 26 sein.

Beispielsweise könnte die Steuereinheit 16 dazu vorgesehen sein, die Teilbereiche der Gebäudelüftungsanlage 26 in einem Intervallbetrieb zu betreiben und insbesondere einen Messort der Sensoren, insbesondere des Zuluftsensors 18 und des Abluftsensors 20, zyklisch zu wechseln, da sich insbesondere eine Luftrichtung umkehren könnte.

## Patentansprüche

1. Gebäudelüftungsvorrichtung mit zumindest einer Lüftungseinheit (12), welche zu einer Förderung einer Zuluft und einer Abluft vorgesehen ist, mit zumindest einer Sensoreinheit (14), welche dazu vorgesehen ist, zumindest einen Lüftungsparameter zu detektieren, und mit zumindest einer Steuereinheit (16), welche dazu vorgesehen ist, die Lüftungseinheit (12) in Abhängigkeit von dem Lüftungsparameter zu betreiben, **dadurch gekennzeichnet, dass** die Sensoreinheit (14) zumindest einen Zuluftsensor (18) aufweist und dazu vorgesehen ist, den Lüftungsparameter mittels des Zuluftsensors (18) in der Zuluft zu detektieren.

2. Gebäudelüftungsvorrichtung nach Anspruch 1, **dadurch gekennzeichnet, dass** die Sensoreinheit (14) zumindest einen Abluftsensor (20) aufweist und dazu vorgesehen ist, zumindest einen weiteren Lüftungsparameter mittels des Abluftsensors (20) in der Abluft zu detektieren.

3. Gebäudelüftungsvorrichtung nach Anspruch 2, **dadurch gekennzeichnet, dass** die Steuereinheit (16) dazu vorgesehen ist, die Lüftungseinheit (12) in Abhängigkeit von einer Differenz zwischen dem Lüftungsparameter und dem weiteren Lüftungsparameter zu betreiben.

4. Gebäudelüftungsvorrichtung nach Anspruch 3, **dadurch gekennzeichnet, dass** die Steuereinheit (16) dazu vorgesehen ist, mittels der Differenz zumindest einen Luftparameter innerhalb eines zu belüftenden Raums (22) innerhalb eines Komfortbereichs zu halten.

5. Gebäudelüftungsvorrichtung nach Anspruch 3 oder 4, **dadurch gekennzeichnet, dass** die Steuereinheit (16) dazu vorgesehen ist, mittels der Differenz zumindest eine Anwesenheit von Lebewesen in einem zu belüftenden Raum (22) zu ermitteln.

6. Gebäudelüftungsvorrichtung nach einem der vorhergehenden Ansprüche, **gekennzeichnet durch** zumindest eine Wärmepumpe (24), wobei die Steuereinheit (16) dazu vorgesehen ist, in Abhängigkeit von dem Lüftungsparameter mittels der Wärmepumpe (24) die Zuluft zu kühlen und/oder zu erwärmen.

7. Gebäudelüftungsvorrichtung nach einem der vorhergehenden Ansprüche, **dadurch gekennzeichnet, dass** die Steuereinheit (16) dazu vorgesehen ist, in Abhängigkeit von dem Lüftungsparameter eine Entstehung von Kondensat in der Zuluft zu verhindern.

8. Gebäudelüftungsvorrichtung nach einem der vorhergehenden Ansprüche, **dadurch gekennzeichnet, dass** der Lüftungsparameter zumindest eine Lufttemperatur und/oder ein CO₂-Gehalt und/oder ein Gehalt an flüchtigen organischen Verbindungen und/oder eine Luftfeuchtigkeit ist.

9. Gebäudelüftungsanlage mit zumindest einer Gebäudelüftungsvorrichtung (10) nach einem der Ansprüche 1 bis 8.

10. Verfahren zum Betrieb zumindest einer Gebäudelüftungsvorrichtung (10) nach einem der Ansprüche 1 bis 8, wobei eine Zuluft und eine Abluft gefördert werden und ein Lüftungsparameter detektiert wird, **dadurch gekennzeichnet, dass** der Lüftungsparameter in der Zuluft detektiert wird.
